(19) Europäisches Patentamt / European Patent Office / Office européen des brevets

(11) **EP 2 636 875 A1**

(12) **EUROPEAN PATENT APPLICATION**
published in accordance with Art. 153(4) EPC

(43) Date of publication:
**11.09.2013 Bulletin 2013/37**

(51) Int Cl.:
***F02D 23/00*** *(2006.01)*  ***F02D 41/18*** *(2006.01)*

(21) Application number: **10857097.9**

(22) Date of filing: **22.11.2010**

(86) International application number:
**PCT/JP2010/070807**

(87) International publication number:
**WO 2012/070100 (31.05.2012 Gazette 2012/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **TOYOTA JIDOSHA KABUSHIKI KAISHA**
**Toyota-shi, Aichi-ken, 471-8571 (JP)**

(72) Inventors:
• **KATSUMATA, Machiko**
 **Toyota-shi,**
 **Aichi-ken 471-8571 (JP)**

• **TANAKA, Satoru**
 **Toyota-shi,**
 **Aichi-ken 471-8571 (JP)**
• **MORIGUCHI, Ryutaro**
 **Toyota-shi,**
 **Aichi-ken 471-8571 (JP)**

(74) Representative: **Intès, Didier Gérard André et al**
 **Cabinet Beau de Loménie**
 **158, rue de l'Université**
 **75340 Paris Cedex 07 (FR)**

(54) **AIR-QUANTITY ESTIMATION DEVICE FOR INTERNAL COMBUSTION ENGINE WITH SUPERCHARGER**

(57) The present invention provides, in an internal combustion engine having a supercharger, an air amount estimating apparatus capable of estimating an amount of air drawn into a cylinder with high accuracy without involving an increased calculation load. The air amount estimating apparatus estimates a cylinder air amount through calculation that incorporates a physical model representing behavior of air flowing through an intake path. When, at this time, a ratio of a throttle downstream pressure to a throttle upstream pressure as calculated with the physical model is smaller than a reference ratio, a throttle flow rate is calculated using an equation of throttle based on the throttle upstream pressure, the throttle downstream pressure, and an opening of a throttle. When the ratio of the throttle downstream pressure to the throttle upstream pressure is greater than the reference ratio, the throttle flow rate is calculated using an equation of linear interpolation based on a compressor flow rate and an intake valve flow rate.

Fig.8

**Description**

Technical Field

The present invention relates, in general, to apparatuses for estimating an amount of air drawn into a cylinder in internal combustion engines having superchargers. More specifically, the present invention relates to an apparatus for estimating an amount of air through calculation that incorporates a physical model representing behavior of air flowing through an intake path.

Background Art

A technique is known for estimating the amount of air drawn into a cylinder of an internal combustion engine by using calculation that incorporates a physical model representing behavior of air in an intake path. Such a technique for estimating the amount of air may be applied to an internal combustion engine having a supercharger, and a supercharged internal combustion engine having an air bypass valve (hereinafter abbreviated to "ABV") or an exhaust gas recirculation system (hereinafter abbreviated to "EGR").

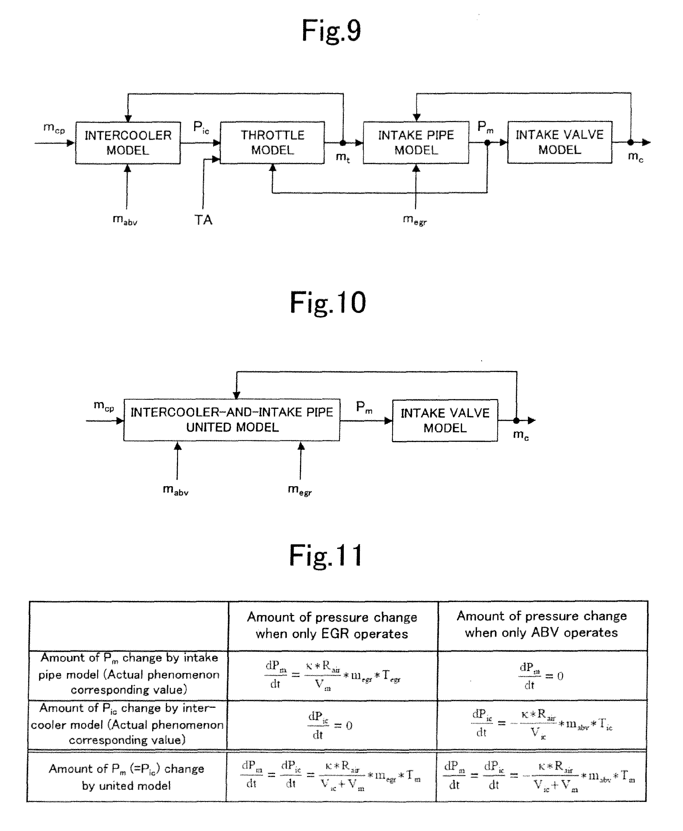

Fig. 9 is a functional block diagram showing an air amount estimating model that strictly models behavior of air in an intake path of a supercharged internal combustion engine. The air amount estimating model shown in Fig. 9 includes, as sub-models, an intercooler model, a throttle model, an intake pipe model, and an intake valve model. Each of these sub-models will be described in detail below by using equations.

The intercooler model is a physical model developed based on a conservation law of air in an intercooler section in the intake path. An equation (1) shown below based on a conservation law of energy and an equation (2) shown below based on a conservation law of flow rate are specifically used as the intercooler model. In the equations, $P_{ic}$ is pressure in the intercooler section (hereinafter referred to as an "intercooler pressure"); $T_{ic}$ is an intercooler temperature; $V_{ic}$ is an intercooler volume; R is a gas constant; $\kappa$ is a specific heat ratio; $m_{cp}$ is a flow rate of gas passing through a compressor (hereinafter referred to as a compressor flow rate); $m_{abv}$ is a flow rate of gas drawn out from the intercooler section by an ABV (hereinafter referred to as an ABV flow rate); $m_t$ is a flow rate of gas passing through a throttle (hereinafter referred to as a throttle flow rate); and $T_a$ is an atmospheric temperature. In the intercooler model, the compressor flow rate $m_{cp}$, the throttle flow rate $m_t$, and the ABV flow rate $m_{abv}$, for example, are inputted and the intercooler pressure $P_{ic}$ is calculated according to the equation (1) and the equation (2).

$$\frac{dP_{ic}}{dt} = \frac{k * R}{V_{ic}} * (m_{cp} * T_a - m_{abv} * T_{ic} - m_t * T_{ic}) + \cdots \qquad .. \text{ Equation (1)}$$

$$\frac{d}{dt}\left(\frac{P_{ic}}{T_{ic}}\right) = \frac{R}{V_{ic}} * (m_{cp} - m_{abv} - m_t) \qquad .. \text{ Equation (2)}$$

Equations of throttle shown below as an equation (3) and an equation (4) are used as the throttle model. In the equations, $\mu$ is a flow rate coefficient; $A_t$ is an opening area when a throttle opening is TA; and $P_m$ is an intake pipe pressure. Further, $P_m/P_{ic}$ is a pressure ratio before and after the throttle. In the throttle model, the throttle opening TA, the intercooler pressure $P_{ic}$, and the intake pipe pressure $P_m$, for example, are inputted and the throttle flow rate $m_t$ is calculated according to the equation (3) and the equation (4).

$$m_t = \mu * A_t(TA) * \frac{P_{ic}}{\sqrt{R * T_{ic}}} * \Phi\left(\frac{P_m}{P_{ic}}\right) \qquad .. \text{ Equation (3)}$$

$$\Phi\left(\frac{P_m}{P_{ic}}\right) = \begin{cases} \sqrt{\dfrac{k}{2*(k+1)}} & \dfrac{P_m}{P_{ic}} \le \dfrac{1}{k+1} \\ \sqrt{\left\{\dfrac{k-1}{2}*\left(1-\dfrac{P_m}{P_{ic}}\right)+\dfrac{P_m}{P_{ic}}\right\}*\left(1-\dfrac{P_m}{P_{ic}}\right)} & \dfrac{P_m}{P_{ic}} > \dfrac{1}{k+1} \end{cases} \quad .. \text{ Equation (4)}$$

The intake pipe model is a physical model developed based on a conservation law of air in an intake pipe (note, however, that the intake pipe in this specification includes an intake manifold and a surge tank). An equation (5) shown below based on the conservation law of energy and an equation (6) shown below based on the conservation law of flow rate are specifically used as the intake pipe model. In the equations, $m_{egr}$ is a flow rate of gas introduced into the intake pipe by the EGR (hereinafter referred to as an "EGR flow rate"); $T_{egr}$ is an EGR temperature; $m_c$ is a flow rate of gas drawn into the cylinder through an intake valve (hereinafter referred to as an "intake valve flow rate"); and $T_m$ is an intake pipe temperature. In the intake pipe model, the throttle flow rate $m_t$, the intake valve flow rate $m_c$, and the EGR flow rate $m_{egr}$, for example, are inputted and the intake pipe pressure $P_m$ is calculated according to the equation (5) and the equation (6).

$$\frac{dP_m}{dt} = \frac{k*R}{V_m}*(m_t*T_{ic}+m_{egr}*T_{egr}-m_c*T_m) \qquad .. \text{ Equation (5)}$$

$$\frac{d}{dt}\left(\frac{P_m}{T_m}\right) = \frac{R}{V_m}*(m_t+m_{egr}-m_c) \qquad .. \text{ Equation (6)}$$

The intake valve model is an experiment-based model that has examined a relationship between the intake valve flow rate $m_c$ and the intake pipe pressure $P_m$. The relationship between the intake valve flow rate $m_c$ and the intake pipe pressure $P_m$ may be approximated by a straight line. Thus, an equation (7) shown below based on an empirical rule is specifically used as the intake valve model. In the equation (7), a and b are constants defined according to an engine speed. In the intake valve model, the intake pipe pressure $P_m$ is inputted and the intake valve flow rate $m_c$ is calculated according to the equation (7).

$$m_c = \frac{T_a}{T_m}(a*P_m-b) \qquad .. \text{ Equation (7)}$$

An ECU as a controller for an internal combustion engine calculates the intake valve flow rate $m_c$ by using the air amount estimating model represented by each of the above equations and estimates the amount of air drawn into the cylinder from the intake valve flow rate $m_c$. Note that the ECU performs calculations according to the four arithmetic operations and, since the above equations include differential equations, is unable to perform calculations by using the equations as they are. When the air amount estimating model is to be mounted on the ECU, therefore, the finite difference method is to be used to discretize the differential equations, so that a solution can be found through the four arithmetic operations.

A calculating problem as that described in JP- A- 2006- 152899 is, however, involved in the above air amount estimating model. Under a condition of a small differential pressure between before and after the throttle with the throttle opening near WOT, a change in a supercharging state changes vibrationally a calculated value of the intake pipe pressure $P_m$. This is because of the following reason. Specifically, in a range of small differential pressures between before and after the throttle, specifically, in a range in which the pressure ratio before and after the throttle is close to 1, a value of a pressure ratio term $\Phi$ of the equation (3) changes greatly relative to a minimal change in the pressure ratio, resulting in hunting occurring. One possible method of solving this problem is to have a small value for a time step used in an approximate expression. As pointed out in the abovementioned publication, however, the method results in an increased calculation load imposed on the ECU.

An air amount estimating apparatus disclosed in JP- A- 2006- 152899 (hereinafter referred to as a "related- art apparatus") employs a method, as a solution to the above problem, of changing air amount estimating models according to the opening of the throttle, and the differential pressure between before and after the throttle. Specifically, the related- art apparatus uses an air amount estimating model as shown in Fig. 10 when the throttle opening is greater than a threshold opening and the intercooler pressure $P_{ic}$, and the intake pipe pressure $P_m$ converge on substantially equal steady values, and the air amount estimating model shown in Fig. 9 at other times. The air amount estimating model shown in Fig. 10 uses an intercooler- and- intake pipe united model, in place of the intercooler model, the throttle model, and the intake pipe model in the air amount estimating model shown in Fig. 9.

The intercooler-and-intake pipe united model is a physical model developed by treating the intercooler, the throttle, and the intake pipe as an integrated volume with the throttle ignored, and based on a conservation law of air in the volume. In the intercooler-and-intake pipe united model, therefore, no calculations are performed of the throttle flow rate using the equation of throttle. In the intercooler-and-intake pipe united model, the intercooler pressure $P_{ic}$ and the intake pipe pressure $P_m$ are assumed to be equal to each other. Further, the intercooler temperature $T_{ic}$ and the intake pipe temperature $T_m$ are assumed to be equal to each other. An equation (8) shown below based on the conservation law of energy and an equation (9) shown below based on the conservation law of flow rate are specifically used as the intercooler-and-intake pipe united model.

$$\frac{dP_m}{dt} = \frac{dP_{ic}}{dt}$$

$$= \frac{k*R}{V_{ic}+V_m} * (m_{cp}*T_a + m_{egr}*T_m - m_{abv}*T_m - m_c*T_m) + \cdots \quad .. \text{ Equation (8)}$$

$$\frac{d}{dt}\left(\frac{P_m}{T_m}\right) = \frac{d}{dt}\left(\frac{P_{ic}}{T_{ic}}\right)$$

$$= \frac{R}{V_{ic}+V_m} * (m_{cp} + m_{egr} - m_{abv} - m_c) \quad .. \text{ Equation (9)}$$

The intercooler-and-intake pipe united model defined by the above equation (8) and equation (9) allows the intake pipe pressure $P_m$ to be calculated mainly from the intercooler pressure $P_{ic}$ and the intake valve flow rate $m_c$. This eliminates the need for calculation of the throttle flow rate using the equation of throttle, so that the intake pipe pressure $P_m$ can be accurately calculated even in a range in which the calculated value of the intake pipe pressure $P_m$ tended to be vibrational. Further, the intercooler-and-intake pipe united model does not increase the calculation load. Consequently, the related-art apparatus is considered to be effective as a solution to the above-described problem.

The related-art apparatus nonetheless has a number of problems to be solved as they relate to an estimating accuracy of the air amount.

One of those problems relates to a range in which the intercooler-and-intake pipe united model can be used. The intercooler-and-intake pipe united model assumes that the throttle opening is close to WOT (wide open throttle) and the intercooler pressure $P_{ic}$ is substantially equal to the intake pipe pressure $P_m$. Under a condition in which there is a difference in pressure between before and after the throttle, therefore, the calculation is performed according to the air amount estimating model, specifically, the calculation model including the equation of throttle. When the equation of throttle is used, however, the calculated value of the intake pipe pressure $P_m$ may be vibrational if the differential pressure between before and after the throttle, if any, is small. For the foregoing reason, the related-art apparatus has room for improvement in terms of accuracy in estimating the air amount under the condition in which the throttle opening is smaller than WOT and there is some difference in pressure between the intercooler pressure $P_{ic}$ and the intake pipe pressure $P_m$.

Another problem relates to the EGR and the ABV that affect the flow rate of air through the intake path. When the EGR operates, air (exhaust gas) is introduced into the intake pipe from an EGR path. According to the air amount estimating model shown in Fig. 9, the EGR flow rate $m_{egr}$ occurring with EGR operation directly affects the intake pipe pressure $P_m$ only. The EGR flow rate $m_{egr}$ affects the intercooler pressure $P_{ic}$ indirectly. Specifically, a change in the EGR flow rate $m_{egr}$ changes the intake pipe pressure $P_m$, the change in the intake pipe pressure $P_m$ changes the throttle flow rate $m_t$, and the change in the throttle flow rate $m_t$ changes the intercooler pressure $P_{ic}$; through the foregoing process, the change in the EGR flow rate $m_{egr}$ affects the intercooler pressure $P_{ic}$. Consequently, response of the intercooler pressure $P_{ic}$ to the change in the EGR flow rate $m_{egr}$ is slow as compared with that of the intake pipe pressure $P_m$.

When the ABV operates, air is drawn out from the intercooler section. According to the air amount estimating model shown in Fig. 9, the ABV flow rate $m_{abv}$ occurring with ABV operation directly affects the intercooler pressure $P_{ic}$ only. The ABV flow rate $m_{abv}$ affects the intake pipe pressure $P_m$ indirectly. Specifically, a change in the ABV flow rate $m_{abv}$ changes the intercooler pressure $P_{ic}$, the change in the intercooler pressure $P_{ic}$ changes the throttle flow rate $m_t$, and the change in the throttle flow rate $m_t$ changes the intake pipe pressure $P_m$; through the foregoing process, the change in the ABV flow rate $m_{abv}$ affects the intake pipe pressure $P_m$. Consequently, response of the intake pipe pressure $P_m$ to the change in the ABV flow rate $m_{abv}$ is slow as compared with that of the intercooler pressure $P_{ic}$.

With the air amount estimating model shown in Fig. 10, however, a change in the EGR flow rate $m_{egr}$ directly affects both the intercooler pressure $P_{ic}$ and the intake pipe pressure $P_m$. Similarly, a change in the ABV flow rate $m_{abv}$ directly affects both the intercooler pressure $P_{ic}$ and the intake pipe pressure $P_m$. This is because the intercooler-and-intake pipe united model assumes that the intercooler pressure $P_{ic}$ is equal to the intake pipe pressure $P_m$. Thus, in the air amount estimating model shown in Fig. 10, a change in the EGR flow rate $m_{egr}$ or the ABV flow rate $m_{abv}$ results in a simultaneous change in both the intercooler pressure $P_{ic}$ and the intake pipe pressure $P_m$. This creates a discrepancy between the calculation made by the model and an actual phenomenon.

The table shown in Fig. 11 shows mathematical expressions representing the amount of change in pressure when only the EGR operates and that when only the ABV operates for each of the intake pipe model, the intercooler model, and the intercooler-and-intake pipe united model. The amount of change in the intake pipe pressure $P_m$ calculated by the intake pipe model strictly represents a phenomenon that actually occurs in the intake pipe. The amount of change in the intercooler pressure $P_{ic}$ calculated by the intercooler model strictly represents a phenomenon that actually occurs in the intercooler section. These may be compared with calculations obtained through the intercooler-and-intake pipe united model to arrive at a finding that the intercooler-and-intake pipe united model is not effective in accurately calculating changes in pressure at different parts of the intake path when the EGR or ABV operates. Thus, in the related-art apparatus, accuracy in estimating the air amount may be degraded when the EGR or ABV operates to change the EGR flow rate $m_{egr}$ or the ABV flow rate $m_{abv}$.

Prior Art Documents

Patent Documents

Patent Document 1     JP- A- 2006- 152899

Patent Document 1     JP- A- 2008- 008155

Summary of the Invention

As described heretofore, the related-art apparatus still has room for improvement in terms of accuracy in estimating the air amount in the internal combustion engine with a supercharger. It is therefore an object of the present invention to provide an air amount estimating apparatus for a supercharged internal combustion engine, capable of estimating an air amount with high accuracy without involving an increased calculation load.

The present invention provides an air amount estimating apparatus having functions of calculating a compressor flow rate, a throttle upstream pressure, a throttle flow rate, a throttle downstream pressure, an intake valve flow rate, and an amount of air drawn in a cylinder. Each of these functions may be achieved by a corresponding piece of hardware dedicated thereto or a single piece of hardware shared among the functions, in which case, each of the functions may be achieved by software. Each of the functions that the air amount estimating apparatus has will be described below.

The compressor flow rate is a flow rate of air passing through a compressor. The air amount estimating apparatus calculates the compressor flow rate based on pressure of air in a throttle upstream section forming an intake path from the compressor to a throttle (hereinafter referred to as the throttle upstream pressure) and a rotating speed of the compressor. For this calculation, a map that associates the compressor flow rate with the throttle upstream pressure and the compressor rotating speed, or a compressor physical model may be used.

For the calculation of the throttle upstream pressure, the air amount estimating apparatus uses a physical model developed based on a conservation law of air in the throttle upstream section. The compressor flow rate and the throttle flow rate representing the flow rate of air passing through the throttle are used as main inputs to the physical model. When the compressor flow rate and the throttle flow rate are inputted to the physical model, the physical model calculates the throttle upstream pressure. The internal combustion engine is often provided with an actuator that draws air from an inside of the throttle upstream section to an outside or introduces air into the throttle upstream section from the outside. In such cases, the physical model may be formed such that the throttle upstream pressure is corrected according to how flow rate of air in the throttle upstream section increases or decreases as the actuator operates.

The function of calculating the throttle flow rate will be described in detail later. This function is one of characteristics of the air amount estimating apparatus relative to the related art, forming a key function of achieving the abovementioned object.

The throttle flow rate is used for calculating pressure of air in a throttle downstream section forming an intake path from the throttle to an intake valve (hereinafter referred to as the throttle downstream pressure). In order to calculate the throttle downstream pressure, the air amount estimating apparatus uses a physical model developed based on a conservation law of air in the throttle downstream section. The throttle flow rate and the intake valve flow rate are used as main inputs to the physical model. When the throttle flow rate and the intake valve flow rate are inputted to the physical model, the physical model calculates the throttle downstream pressure. The internal combustion engine is often provided with an actuator that draws air from an inside of the throttle downstream section to an outside or introduces air into the throttle downstream section from the outside. In such cases, the physical model may be formed such that the throttle downstream pressure is corrected according to how flow rate of air in the throttle downstream section increases or decreases as the actuator operates.

The intake valve flow rate is a flow rate of air passing through the intake valve. The air amount estimating apparatus calculates the intake valve flow rate based on the throttle downstream pressure. For this calculation, a mathematical expression based on an empirical rule, specifically, a linear function having the throttle downstream pressure as a variable, may be used. The air amount estimating apparatus calculates the amount of air drawn into the cylinder based on the intake valve flow rate, specifically, an integrated value of the intake valve flow rate for a period from opening to closing of the intake valve.

The air amount estimating apparatus can employ the following two calculation methods for calculating the throttle flow rate. The first calculation method is to calculate the throttle flow rate using equations of throttle based on the throttle upstream pressure, the throttle downstream pressure, and the throttle opening. The equations of throttle employed by the air amount estimating apparatus are specifically the equation (3) and the equation (4) described earlier.

The second calculation method to be employed by the air amount estimating apparatus assumes that the throttle flow rate should fall between the compressor flow rate and the intake valve flow rate and, based on that assumption, calculates the throttle flow rate by using an equation of linear interpolation based on the compressor flow rate and the intake valve flow rate. The equation of linear interpolation employed by the air amount estimating apparatus is an equation having a ratio of a volume of the throttle upstream section to a volume of the throttle downstream section as an internal dividing ratio, specifically, an equation (10) given below. In the equation (10), $m_t$ is the throttle flow rate, $m_{cp}$ is the compressor flow rate, $m_c$ is the intake valve flow rate, $V_{us}$ is the volume of the throttle upstream section, and $V_{ds}$ is the volume of the throttle downstream section.

$$m_t = \frac{V_{ds} * m_{cp} + V_{us} * m_c}{V_{us} + V_{ds}} \qquad .. \text{Equation (10)}$$

The air amount estimating apparatus selects either one of the above two calculation methods and calculates the throttle flow rate according to the selected calculation method. Conditions for making the selection include a pressure condition relating to a relationship between the throttle downstream pressure and the throttle upstream pressure. The pressure condition used in the air amount estimating apparatus is that the difference between the throttle upstream pressure and the throttle downstream pressure is smaller than a reference difference, or a ratio of the throttle downstream pressure to the throttle upstream pressure is greater than a reference ratio. The air amount estimating apparatus determines whether or not predetermined selection conditions including such a pressure condition are satisfied. Determining that the selection conditions are not satisfied, the air amount estimating apparatus opts to calculate the throttle flow rate according to the first calculation method. Determining that the selection conditions are satisfied, on the other hand, the air amount estimating apparatus opts to calculate the throttle flow rate according to the second calculation method.

The above selection conditions are such that the calculation using the equation of throttle results in the throttle downstream pressure, specifically, the calculated value of the intake pipe pressure being vibrational. Under such conditions, the air amount estimating apparatus calculates the throttle flow rate by using the equation of linear interpolation, in place of the equation of throttle. When the equation of throttle is used for calculation of the throttle flow rate, the throttle upstream pressure and the throttle downstream pressure are complicatedly interrelated with each other in the calculation. Use of a similar equation of linear interpolation as that shown in the equation (10) for the calculation of the throttle flow rate, however, allows the throttle upstream pressure and the throttle downstream pressure to be individually calculated. This allows the throttle downstream pressure to be calculated accurately even in a range in which the calculated value of the throttle downstream pressure tends to be vibrational in the calculation of the throttle flow rate using the equation of throttle. In addition, a relation shown in the equation (10) holds true even in a condition in which the throttle opening is smaller than WOT and there is some difference in pressure between the intercooler pressure $P_{ic}$ and the intake pipe pressure $P_m$. The use of a similar equation of linear interpolation as that shown in the equation (10) can therefore improve the accuracy in estimating the air amount in all ranges in which the calculated value of the throttle downstream pressure is vibrational. Moreover, the use of the similar equation of linear interpolation as that shown in the equation (10) eliminates the likelihood that the calculation load will be increased in exchange for the improved accuracy in estimating the air amount.

Adequacy of using the equation of linear interpolation for the calculation of the throttle flow rate will now be described. A change in the state of air in the throttle upstream section can be expressed by an equation (11) according to the conservation law of flow rate. In the equation (11), $P_{us}$ is the throttle upstream pressure and $T_{us}$ is a throttle upstream temperature. For sake of simplicity, it is assumed that there is no actuator that draws air from the inside of the throttle upstream section to the outside or introduces air into the throttle downstream section from the outside, or there is such an actuator but that does not operate.

$$\frac{d}{dt}\left(\frac{P_{us}}{T_{us}}\right) = \frac{R}{V_{us}} * (m_{cp} - m_t) \qquad \text{.. Equation (11)}$$

In the equation (11) of the conservation law of flow rate in the throttle upstream section, if the throttle flow rate $m_t$ is to be calculated with the equation (10), the equation (11) may be expressed by an equation (12).

$$\frac{d}{dt}\left(\frac{P_{us}}{T_{us}}\right) = \frac{R}{V_{ic} + V_m} * (m_{cp} - m_c) \qquad \text{.. Equation (12)}$$

A change in the state of air in the throttle downstream section can be expressed by an equation (13) according to the conservation law of flow rate. In the equation (13), $P_{ds}$ is the throttle downstream pressure and $T_{ds}$ is a throttle downstream temperature. For sake of simplicity, it is assumed that there is no actuator that draws air from the inside of the throttle downstream section to the outside or introduces air into the throttle downstream section from the outside, or there is such an actuator but that does not operate.

$$\frac{d}{dt}\left(\frac{P_{ds}}{T_{ds}}\right)=\frac{R}{V_{ds}}*(m_t-m_c) \qquad .. \; \text{Equation (13)}$$

In the equation (13) of the conservation law of flow rate in the throttle downstream section, if the throttle flow rate $m_t$ is to be calculated with the equation (10), the equation (13) may be expressed by an equation (14).
$$\frac{d}{dt}\left(\frac{P_{ds}}{T_{ds}}\right)=\frac{R}{V_{ic}+V_m}*(m_{cp}-m_c) \qquad .. \; \text{Equation (14)}$$

A relationship represented by an equation (15) shown below can be derived from the equation (13) and the equation (14).
$$\frac{d}{dt}\left(\frac{P_{us}}{T_{us}}\right)=\frac{d}{dt}\left(\frac{P_{ds}}{T_{ds}}\right) \qquad .. \; \text{Equation (15)}$$

Under a condition in which the abovementioned pressure condition is satisfied, the throttle upstream temperature $T_{us}$ may be considered to be equal to the throttle downstream temperature $T_{ds}$. Thus, a relationship represented by an equation (16) shown below can be obtained from the equation (15). The equation (16) shows that an amount of change in the throttle upstream pressure $P_{us}$ is equal to an amount of change in the throttle downstream pressure $P_{ds}$.
$$\frac{d}{dt}(P_{us})=\frac{d}{dt}(P_{ds}) \qquad .. \; \text{Equation (16)}$$

The relationship between the throttle upstream pressure $P_{us}$ and the throttle downstream pressure $P_{ds}$ actually holds true under the condition in which the abovementioned pressure condition is satisfied. According to the equation of linear interpolation shown in the equation (10), the relationship represented by the equation (16) can be made to hold true between a calculated value of the throttle upstream pressure $P_{us}$ and a calculated value of the throttle downstream pressure $P_{ds}$, regardless of the supercharging state of the internal combustion engine. This verifies the adequacy of the equation of linear interpolation shown in the equation (10) as a calculation formula for the throttle flow rate under the condition in which the abovementioned pressure condition is satisfied.
In addition, in the air amount estimating apparatus, when the actuator that draws air from the throttle upstream section to the outside or introduces air into the throttle upstream section from the outside operates, an effect thereof directly affects only the calculation of the throttle upstream pressure, and not that of the throttle downstream pressure. Similarly, when the actuator that draws air from the throttle downstream section to the outside or introduces air into the throttle downstream section from the outside operates, an effect thereof directly affects only the calculation of the throttle downstream pressure, and not that of the throttle upstream pressure. The air amount estimating apparatus can therefore accurately calculate the throttle upstream pressure or the throttle downstream pressure and accordingly estimate the air amount accurately, even if the internal combustion engine includes an actuator, such as the ABV and the EGR, and such an actuator operates.

Brief Description of the Drawings

Fig. 1 is a functional block diagram showing an air amount estimating model employed in an air amount estimating apparatus according to an embodiment of the present invention.

Fig. 2 is a functional block diagram showing an air amount estimating model employed in the air amount estimating apparatus according to the embodiment of the present invention.

Fig. 3 is a functional block diagram showing an air amount estimating model employed in the air amount estimating apparatus according to the embodiment of the present invention.

Fig. 4 is a functional block diagram showing an air amount estimating model employed in the air amount estimating apparatus according to the embodiment of the present invention.

Fig. 5 is a functional block diagram showing an air amount estimating model employed in the air amount estimating apparatus according to the embodiment of the present invention.

Fig. 6 is an illustration for illustrating a throttle model employed in the air amount estimating apparatus according to the embodiment of the present invention.

Fig. 7 is a flow chart showing processes for calculating an intercooler pressure performed by the air amount estimating apparatus according to the embodiment of the present invention.

Fig. 8 is a flow chart showing processes for calculating an intake pipe pressure performed by the air amount estimating apparatus according to the embodiment of the present invention.

Fig. 9 is a functional block diagram showing an air amount estimating model that strictly models behavior of air in an intake path of a supercharged internal combustion engine.

Fig. 10 is a functional block diagram showing an air amount estimating model employed in a related-art apparatus.

Fig. 11 is a chart for illustrating problems of the air amount estimating model employed in the related-art apparatus.

Modes for Carrying Out the Invention

An embodiment of the present invention will be described with reference to the accompanying drawings.

An air amount estimating apparatus according to the embodiment of the present invention is applied to an internal combustion engine with a supercharger. The internal combustion engine to which the air amount estimating apparatus according to this embodiment is applied is a four-cycle reciprocating engine whose torque can be controlled by adjusting an air amount with a throttle. The supercharger included in the internal combustion engine according to this embodiment is a turbo type supercharger in which a compressor disposed on an intake path is driven by rotation of a turbine disposed on an exhaust path. An intercooler for cooling air heated through compression by the compressor is disposed between the compressor and the throttle. The supercharged internal combustion engine according to this embodiment further includes an ABV that bypasses air in an intercooler section to an upstream side of the compressor in the intake path and an EGR that recirculates an exhaust gas in the exhaust path back into an intake pipe. Additionally, the supercharged internal combustion engine according to this embodiment is a port injection type internal combustion engine that injects fuel to an intake port of each cylinder.

The air amount estimating apparatus according to this embodiment is achieved as one of functions of an ECU included in the internal combustion engine. Specifically, a program stored in memory is executed by a CPU, which results in the ECU functioning as the air amount estimating apparatus. When functioning as the air amount estimating apparatus, the ECU uses a programmed air amount estimating model to estimate an amount of air drawn in the cylinder (hereinafter referred to as a "cylinder air amount").

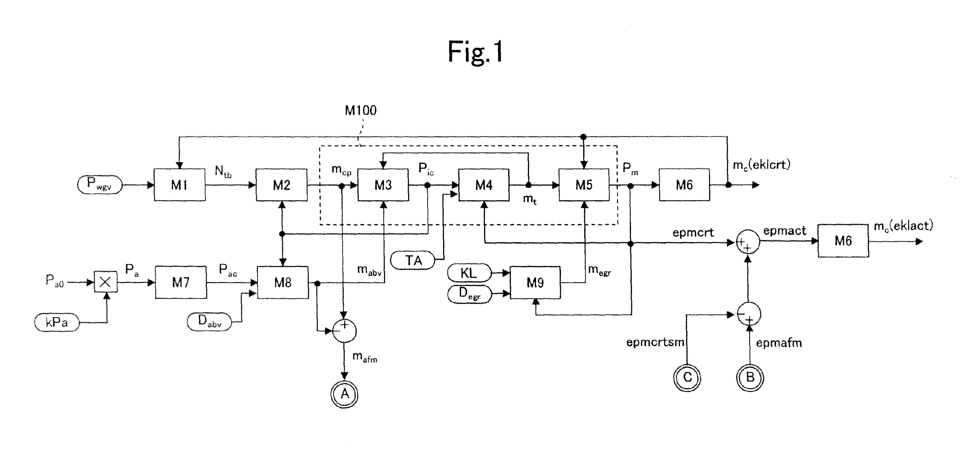

The air amount estimating model employed in this embodiment includes four calculation models designated as first through fourth. Fig. 1 is a functional block diagram showing a first calculation model of the air amount estimating model. The first calculation model calculates an intake valve flow rate relative to a current throttle opening. The first calculation model includes a turbo rotational speed model M1, a compressor model M2, an intercooler model M3, a throttle model M4, an intake pipe model M5, an intake valve model M6, an air cleaner model M7, an ABV model M8, and an EGR model M9. Each of the sub-models included in the first calculation model will be described below.

The turbo rotational speed model M1 is concerned with rotational behavior of the supercharger, comprising a physical model represented by a mathematical expression or a map based on experimental data. Receiving inputs of a diaphragm pressure $P_{wgv}$ of a waste gate valve and an intake valve flow rate $m_c$ (eklcrt) calculated by the intake valve model M6 to be described later, the turbo rotational speed model M1 calculates a turbo rotational speed $N_{tb}$ from the information inputted thereto. Note that the diaphragm pressure $P_{wgv}$ is information obtained through a sensor.

The compressor model M2 is concerned with the compressor of the supercharger, comprising a physical model represented by a mathematical expression or a map based on experimental data. Receiving inputs of the turbo rotational speed $N_{tb}$ calculated by the turbo rotational speed model M1 and an intercooler pressure $P_{ic}$ calculated by the intercooler model M3 to be described later, the compressor model M2 calculates a compressor flow rate $m_{cp}$ from the information inputted thereto.

The air cleaner model M7 calculates a pressure loss due to an air cleaner disposed at an inlet of the intake path, comprising a physical model represented by a mathematical expression or a map based on experimental data. The air cleaner model M7 subtracts the pressure loss from an atmospheric pressure $P_a$ to arrive at a compressor upstream pressure $P_{ac}$. The atmospheric pressure $P_a$ to be inputted to the air cleaner model M7 can be obtained by multiplying a base value $P_{a0}$ by an output value kPa of an atmospheric pressure sensor.

The ABV model M8 calculates a flow rate of air drawn by the ABV from the intercooler section to the outside. The equation of throttle is used as the ABV model M8. Receiving inputs of such information as the compressor upstream pressure $P_{ac}$ calculated by the air cleaner model M7, the intercooler pressure $P_{ic}$ calculated by the intercooler model M3 to be described later, and a drive duty $D_{abv}$ of the ABV, the ABV model M8 calculates an ABV flow rate $m_{abv}$ from the information inputted thereto. The drive duty $D_{abv}$ of the ABV is calculated through ABV control performed by the ECU.

The EGR model M9 calculates a flow rate of air (exhaust gas) recirculated back from the exhaust path into the intake pipe by the EGR, comprising a physical model represented by a mathematical expression or a map based on experimental data. Receiving inputs of such information as an intake pipe pressure $P_{am}$ calculated by the intake pipe model M5 to be described later, a load KL on the internal combustion engine, and a drive duty $D_{egr}$ of an EGR valve, the EGR model M9 calculates an EGR flow rate $m_{egr}$ from the information inputted thereto. The drive duty $D_{egr}$ of the EGR valve is calculated through EGR control performed by the ECU and the load KL is calculated from the cylinder intake air amount.

The intercooler model M3, the throttle model M4, the intake pipe model M5, and the intake valve model M6 are as described earlier with reference to the related-art air amount estimating model shown in Fig. 9. Specifically, with the intercooler model M3, the intercooler pressure $P_{ic}$ is calculated according to the equation (1) and the equation (2) from such information inputted thereto as the compressor flow rate $m_{cp}$ calculated by the compressor model M2, a throttle flow rate $m_t$ calculated by the throttle model M4 to be described later, and the ABV flow rate $m_{abv}$ calculated by the ABV model M8.

With the throttle model M4, the throttle flow rate $m_t$ is calculated according to the equation (3) and the equation (4) from such information inputted thereto as a throttle opening TA, the intercooler pressure $P_{ic}$ calculated by the intercooler model M3, and the intake pipe pressure $P_m$ calculated by the intake pipe model M5 to be described later. Note that the throttle opening TA is information obtained through a sensor.

With the intake pipe model M5, the intake pipe pressure $P_m$ is calculated according to the equation (5) and the equation (6) from such information inputted thereto as the throttle flow rate $m_t$ calculated by the throttle model M4, the intake valve flow rate $m_c$ (eklcrt) calculated by the intake valve model M6 to be described later, and the EGR flow rate $m_{egr}$ calculated by the EGR model M9.

With the intake valve model M6, the intake valve flow rate $m_c$ is calculated according to the equation (7) from the intake pipe pressure $P_m$ calculated by the intake pipe model M5. Referring, however, to Fig. 1, the first calculation model of the air amount estimating model includes two intake valve models M6. The intake pipe pressure $P_m$ calculated by the intake pipe model M5 is directly inputted to a first intake valve model M6. The intake valve flow rate $m_c$ (eklcrt) calculated from the intake pipe pressure $P_m$ is used in calculations performed by the turbo rotational speed model M1 and the intake pipe model M5 as described earlier.

A second intake valve model M6 receives an input of a corrected intake pipe pressure $P_m$ (epmact) that represents a sum of an intake pipe pressure $P_m$ (epmcrt) calculated by the intake pipe model M5 and a correction amount for correcting a model error of the first calculation model. In the second intake valve model M6, an intake value flow rate $m_c$ (eklact) is calculated based on the corrected intake pipe pressure $P_m$ (epmact). In the air amount estimating apparatus, the cylinder air amount is calculated based on the intake value flow rate $m_c$ (eklact), specifically, from an integrated value of the intake value flow rate $m_c$ (eklact) for the period from opening to closing of the intake valve.

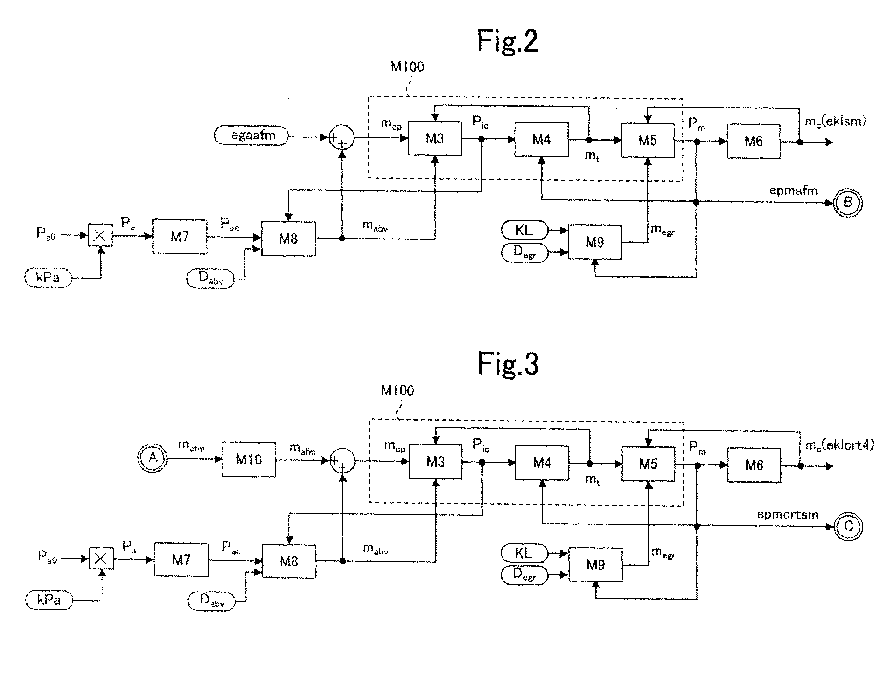

The correction amount to be added to the intake pipe pressure $P_m$ (epmcrt) is calculated by the second calculation model and the third calculation model. Fig. 2 is a functional block diagram showing the second calculation model of the air amount estimating. Fig. 3 is a functional block diagram showing the third calculation model of the air amount estimating. The second calculation model calculates the intake pipe pressure based on a flow rate of air (hereinafter referred to as an "AFM flow rate") actually measured with an air flow meter (hereinafter referred to as an "AFM"). The third calculation model calculates the intake pipe pressure based on a calculated value of the AFM flow rate.

The second calculation model includes the intercooler model M3, the throttle model M4, the intake pipe model M5, the intake valve model M6, the air cleaner model M7, the ABV model M8, and the EGR model M9. Input/output of information between these sub-models M3, M4, M5, M6, M7, M8, and M9 is similar to that in the first calculation model. In the second calculation model, however, a sum of an AFM flow rate egaafm measured by the AFM and the ABV flow rate $m_{abv}$ calculated by the ABV model M8 is calculated as the compressor flow rate $m_{cp}$. The second calculation model calculates an intake valve flow rate $m_c$ (eklsm) and an intake pipe pressure $P_m$ (epmafm) based on the compressor flow rate $m_{cp}$ calculated as described above.

The third calculation model further includes an air flow meter model M10, in addition to the sub-models M3, M4, M5, M6, M7, M8, and M9 included in the second calculation model. The AFM has a response lag based on a unique response characteristic. The air flow meter model M10 simulates such a response characteristic of the AFM, and outputs a flow rate that incorporates the response lag of the AFM relative to a flow rate input.

In the third calculation model, a calculated value of the AFM flow rate (hereinafter referred to as a calculated AFM flow rate) $m_{afm}$ is inputted to the air flow meter model M10. The calculated AFM flow rate $m_{afm}$ is calculated as a difference between the compressor flow rate $m_{cp}$ calculated by the compressor model M2 of the first calculation model and the ABV flow rate $m_{abv}$ calculated by the ABV model M8 of the first calculation model. The air flow meter model M10 outputs the calculated AFM flow rate $m_{afm}$ that has undergone delay processing according to the response lag of the AFM. Then, in the third calculation model, a sum of the calculated AFM flow rate $m_{afm}$ that has undergone the delay processing by the air flow meter model M10 and the ABV flow rate $m_{abv}$ calculated by the ABV model M8 is calculated as the compressor flow rate $m_{cp}$. The third calculation model calculates an intake valve flow rate $m_c$ (eklcrt4) and an intake pipe pressure $P_m$ (epmcrtsm) based on the compressor flow rate $m_{cp}$ calculated as described above.

The first calculation model calculates a difference between the intake pipe pressure $P_m$ (epmafm) calculated by the second calculation model and the intake pipe pressure $P_m$ (epmcrtsm) calculated by the third calculation model. This difference may be regarded as that an error of the calculated AFM flow rate $m_{afm}$ calculated by the model relative to an actual AFM flow rate egaafm is converted to a difference in the intake pipe pressure $P_m$ (model error). The first calculation model adds the abovementioned difference as a correction amount for the model error to the intake pipe pressure $P_m$ (epmcrt) to arrive at a corrected intake pipe pressure $P_m$ (epmact). The air amount estimating apparatus calculates the intake value flow rate $m_c$ (eklact) from the corrected intake pipe pressure $P_m$ (epmact) and, based on the intake value flow rate $m_c$ (eklact), specifically, an integrated value of the intake value flow rate $m_c$ (eklact) for the period from opening to closing of the intake valve, calculates the cylinder air amount. This allows the cylinder air amount to be estimated accurately.

In the actual internal combustion engine, a point in time at which the cylinder air amount is determined is when the intake valve is closed. Since the internal combustion engine of this embodiment is a port injection type internal combustion engine, fuel injection of each cylinder is required to be completed at least before the intake valve closes. In order to make an air-fuel ratio of a mixture formed in the cylinder match a target air-fuel ratio, therefore, it is required to predict the cylinder air amount at the closure of the intake valve at the time of fuel injection prior to the closure of the intake valve. To enable this prediction, it is necessary to predict the throttle opening at a future point in time ahead of the current point in time, specifically, a future throttle opening. The air amount estimating apparatus of this embodiment then performs what is called throttle delay control, in which the throttle is operated so that the actual throttle opening delays by a predetermined time relative to the target throttle opening as calculated based on an accelerator pedal operating amount of a vehicle. According to this throttle delay control, the target throttle opening corresponds to a future throttle opening after the lapse of the predetermined time, so that the future throttle opening can be predicted from the target throttle opening.

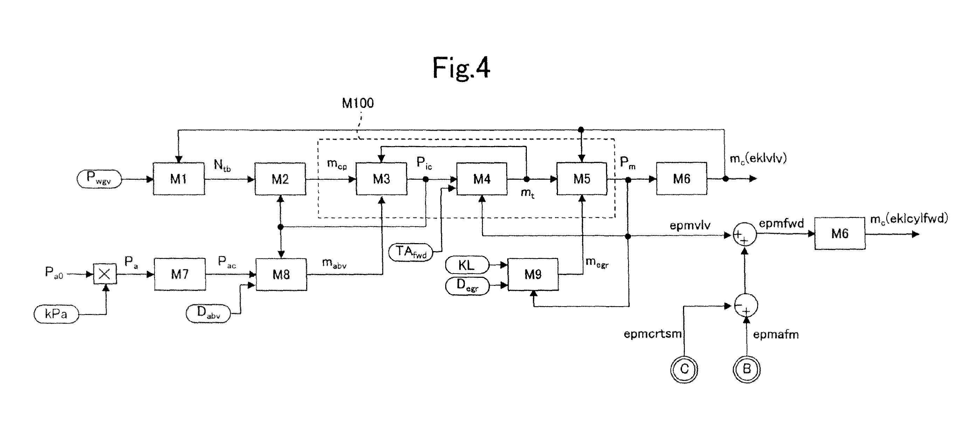

The fourth calculation model calculates the cylinder air amount at the closure of the intake valve based on a future throttle opening $TA_{fwd}$ predicted as described above. Fig. 4 is a functional block diagram showing the fourth calculation model. Referring to Fig. 4, the fourth calculation model includes the turbo rotational speed model M1, the compressor model M2, the intercooler model M3, the throttle model M4, the intake pipe model M5, the intake valve model M6, the air cleaner model M7, the ABV model M8, and the EGR model M9. Input/output of information between these sub-models M1, N2, M3, M4, M5, M6, M7, M8, and M9 is similar to that in the first calculation model. In the fourth calculation model, however, the predicted throttle opening $TA_{fwd}$ is inputted to the throttle model M4.

In addition, the fourth calculation model includes two intake valve models M6 as in the first calculation model. A first intake valve model M6 receives a direct input of the intake pipe pressure $P_m$ calculated by the intake pipe model M5. An intake valve flow rate $m_c$ (eklvlv) calculated from the intake pipe pressure $P_m$ is used in calculations performed by the turbo rotational speed model M1 and the intake pipe model M5.

A second intake valve model M6 receives an input of a corrected intake pipe pressure $P_m$ (epmfwd) that represents a sum of an intake pipe pressure $P_m$ (epmvlv) calculated by the intake pipe model M5 and a correction amount for correcting a model error of the fourth calculation model. A difference between the intake pipe pressure $P_m$ (epmafm) calculated by the second calculation model and the intake pipe pressure $P_m$ (epmcrtsm) calculated by the third calculation model is used as the correction amount. The second intake valve model M6 calculates an intake valve flow rate $m_c$ (eklcylfwd) based on the corrected intake pipe pressure $P_m$ (epmfwd). The intake valve flow rate $m_c$ (eklcylfwd) represents a future intake valve flow rate after the lapse of a predetermined period of time. Based on this predicted intake valve flow rate $m_c$ (eklcylfwd), the air amount estimating apparatus estimates the cylinder air amount at the closure of the intake valve and calculates a fuel injection amount by using the estimated cylinder air amount at the closure of the intake valve and the target air- fuel ratio.

The four calculation models that make up the air amount estimating model according to this embodiment have been described heretofore. The air amount estimating model according to this embodiment has two modes that are available for each of the calculation models. The arrangement of each calculation model shown in a corresponding one of Figs. 1 to 4 corresponds to one of the two modes. The two modes of the air amount estimating model will be described below.

The air amount estimating apparatus has, as the modes of the air amount estimating model, a first mode selected when the predetermined selection conditions are not satisfied and a second mode selected when the predetermined selection conditions are satisfied. The arrangements of the air amount estimating models shown in Figs. 1 to 4 correspond to those in the first mode. The first mode is characterized in that the throttle model M4 that calculates the throttle flow rate $m_t$ using the equation of throttle, specifically, the equation (3) and the equation (4), is used.

The selection conditions for selecting the mode include such a pressure condition that the cylinder air amount cannot be accurately estimated through the calculation of the throttle flow rate $m_t$ performed by the throttle model M4. Specifically, the selection conditions include a pressure condition that a pressure ratio $P_m/P_{ic}$ between the intake pipe pressure $P_m$ and the intercooler pressure $P_{ic}$ is greater than a predetermined reference ratio set to a value smaller than 1. In a range in which the pressure ratio $P_m/P_{ic}$ between the intake pipe pressure $P_m$ and the intercooler pressure $P_{ic}$ is close to 1, a value of a pressure ratio term $\Phi$ of the equation (3) changes greatly relative to a minimal change in the pressure ratio $P_m/P_{ic}$. This results in hunting occurring, causing the intake pipe pressure $P_m$ to be vibrational, so that the cylinder air amount can no longer be estimated accurately.

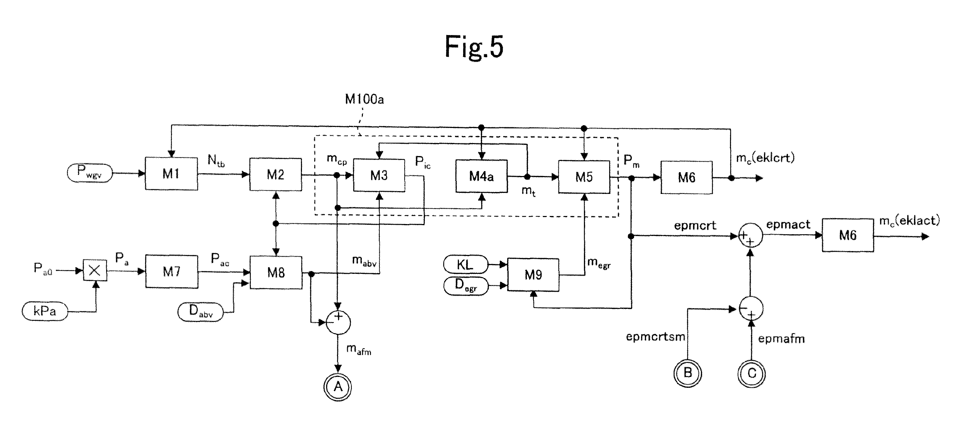

The second mode of the air amount estimating model used when the above selection conditions are satisfied does not use the equation of throttle for the calculation of the throttle flow rate $m_t$. In the second mode, a throttle model M4a to be described below is used in each of the calculation modes in place of the throttle model M4 of the first mode. Fig. 5 is a functional block diagram showing the first calculation model in the second mode. Though not shown in the figure, input/output of information between the throttle model M4a and other sub-models in other calculation models is similar to that in the first calculation model shown in Fig. 5.

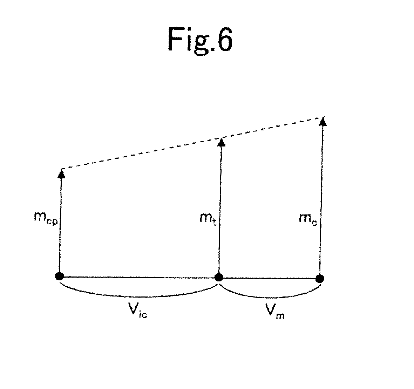

The throttle model M4a employs an equation (17) shown below for the calculation of the throttle flow rate $m_t$. The equation (17) is concerned with calculating the throttle flow rate $m_t$ through linear interpolation from the compressor flow rate $m_{cp}$ and the intake valve flow rate $m_c$. Referring to Fig. 6, in this equation of linear interpolation, the throttle flow rate $m_t$ as an intermediate point is calculated with a ratio of an intercooler section volume $V_{ic}$ as the volume of the throttle upstream section to an intake pipe volume $V_m$ as the volume of the throttle downstream section as an internal dividing ratio.

$$m_t = \frac{V_m * m_{cp} + V_{ic} * m_c}{V_{ic} + V_m} \qquad .. \text{ Equation (17)}$$

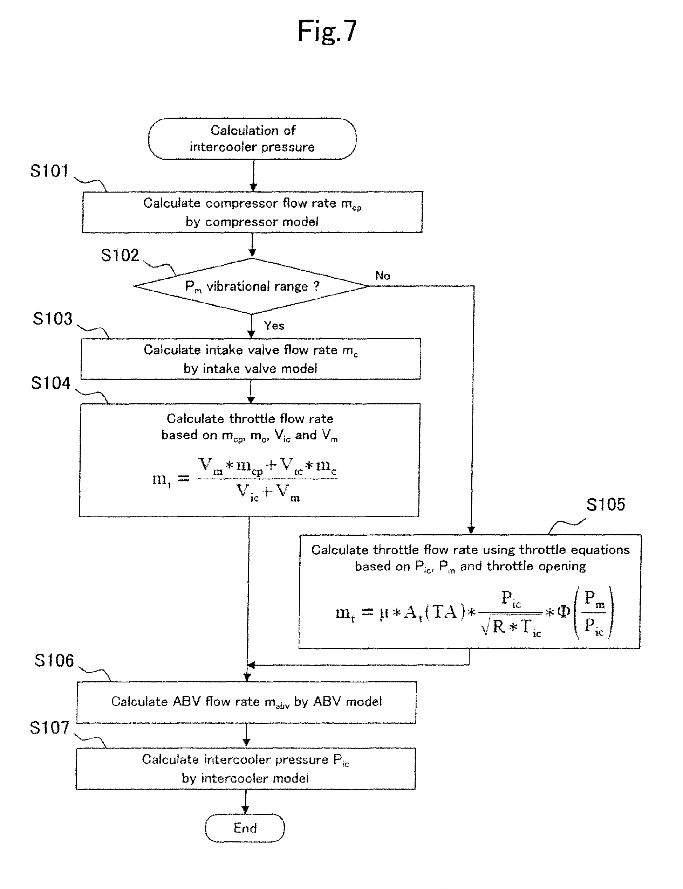

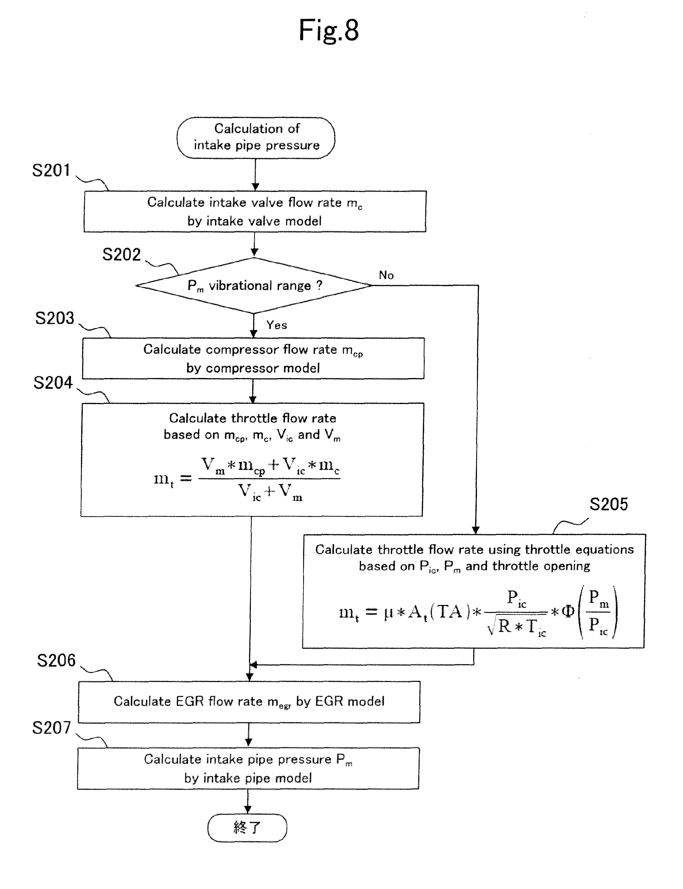

In the throttle model M4a, the throttle flow rate $m_t$ is calculated with the compressor flow rate $m_{cp}$ calculated by the compressor model M2 and the intake valve flow rate $m_c$ (eklcrt) calculated by the intake valve model M6 as input information. The throttle opening is not required as the input information. Information relating to pressure, such as the intake pipe pressure $P_m$ and the intercooler pressure $P_{ic}$, is not required, either. When the equation of throttle is used for the calculation of the throttle flow rate $m_t$, the intercooler pressure $P_{ic}$ and the intake pipe pressure $P_m$ are complicatedly interrelated with each other in their calculations. If the equation of linear interpolation shown in the equation (17) is used for the calculation of the throttle flow rate $m_t$, however, the intercooler pressure $P_{ic}$ and the intake pipe pressure $P_m$ can be individually calculated as shown in flow charts of Figs. 7 and 8.

The flow charts shown in Figs. 7 and 8 will be described below. The flow chart of Fig. 7 shows processes for calculating the intercooler pressure $P_{ic}$ performed by the air amount estimating apparatus. The flow chart of Fig. 8 shows processes for calculating the intake pipe pressure $P_m$ performed by the air amount estimating apparatus.

Referring to the flow chart of Fig. 7, in the calculation of the intercooler pressure $P_{ic}$, the compressor flow rate $m_{cp}$ is first calculated by the compressor model M2 (step S101). Next, it is determined whether or not the range is one in which the calculation of the throttle flow rate $m_t$ using the equation of throttle results in the intake pipe pressure $P_m$ being vibrational, specifically, the abovementioned selection conditions are satisfied (step S102). When the result is in the negative, the throttle flow rate $m_t$ is calculated according to the equations of throttle shown in the equation (3) and the equation (4) based on the intake pipe pressure $P_m$, the intercooler pressure $P_{ic}$, and the throttle opening TA (step S105). When the result is in the affirmative, on the other hand, the intake valve flow rate $m_c$ is calculated by the intake valve model M6 (step S103). Then, the throttle flow rate $m_t$ is calculated according to the equation of linear interpolation shown in the equation (17) based on the compressor flow rate $m_{cp}$ and the intake valve flow rate $m_c$ (step S104). Following the calculation of the throttle flow rate $m_t$, the ABV flow rate $m_{abv}$ is calculated by the ABV model M8 (step S106). Then, the intercooler pressure $P_{ic}$ is calculated by the intercooler model M3 (step S107).

Referring to the flow chart of Fig. 8, in the calculation of the intake pipe pressure $P_m$, the intake valve flow rate $m_c$ is first calculated by the intake valve model M6 (step S201). Next, it is determined whether or not the range is one in which the calculation of the throttle flow rate $m_t$ using the equation of throttle results in the intake pipe pressure $P_m$ being vibrational, specifically, the abovementioned selection conditions are satisfied (step S202). When the result is in the negative, the throttle flow rate $m_t$ is calculated according to the equations of throttle shown in the equation (3) and the equation (4) based on the intake pipe pressure $P_m$, the intercooler pressure $P_{ic}$, and the throttle opening TA (step S205). When the result is in the affirmative, on the other hand, the compressor flow rate $m_{cp}$ is calculated by the compressor model M2 (step S203). Then, the throttle flow rate $m_t$ is calculated according to the equation of linear interpolation shown in the equation (17) based on the compressor flow rate $m_{cp}$ and the intake valve flow rate $m_c$ (step S204). Following the calculation of the throttle flow rate $m_t$, the EGR flow rate $m_{egr}$ is calculated by the EGR model M9 (step S206). Then, the intake pipe pressure $P_m$ is calculated by the intake pipe model M5 (step S207).

Calculation of the intercooler pressure $P_{ic}$ and the intake pipe pressure $P_m$ is performed through the processes as described above, which allows the intake pipe pressure $P_m$ to be calculated accurately without letting vibration occur even in the range in which the intake pipe pressure $P_m$ tends to be vibrational with the equation of throttle. Further, the calculation of the throttle flow rate $m_t$ using the equation (17) does not result in the calculation load being increased in exchange for accuracy in estimating the cylinder air amount.

Referring now to Fig. 5, a model including the intercooler model M3, the throttle model M4a, and the intake pipe model M5 is defined as an intercooler-intake pipe model M100a. Similarly, referring to each of Figs. 1 to 4, a model including the intercooler model M3, the throttle model M4, and the intake pipe model M5 is defined as an intercooler-intake pipe model M100. In each of the calculation models, the intercooler-intake pipe model M100 is changed to the intercooler-intake pipe model M100a when the abovementioned selection conditions are satisfied.

In the related-art apparatus disclosed in JP-A-2006-152899, an intercooler- and-intake pipe united model shown in Fig. 10 is used in a portion corresponding to the intercooler-intake pipe model M100a. Comparing the intercooler-and-intake pipe united model of the related-art apparatus with the intercooler-intake pipe model M100a, the intercooler-intake pipe model M100a is characterized in that a direct effect of the ABV flow rate $m_{abv}$ can be limited only to the calculation of the intercooler pressure $P_{ic}$, and a direct effect of the EGR flow rate $m_{egr}$ can be limited only to the calculation of the intake pipe pressure $P_m$. Having such characteristics, the air amount estimating apparatus allows the intercooler pressure $P_{ic}$ and the intake pipe pressure $P_m$ to be calculated accurately even when the ABV or the EGR operates, and the cylinder air amount to be accurately estimated.

While the invention has been described in conjunction with preferred embodiments, it should be understood that the present invention is not limited to those preferred embodiments. The preferred embodiments may be variously modified to implement the present invention without departing from the spirit thereof. For example, in the embodiment, the pressure condition is that the pressure ratio between the intercooler pressure $P_{ic}$ and the intake pipe pressure $P_m$ is greater than the reference ratio; however, the pressure condition may be that the difference between the intercooler pressure $P_{ic}$ and the intake pipe pressure $P_m$ is smaller than a reference difference. Further, the selection conditions may include a condition that the throttle opening is greater than a reference opening, in addition to the pressure condition.

The supercharged internal combustion engine to which the air amount estimating apparatus of the present invention is applied may be an internal combustion engine having a mechanical supercharger that drives a compressor disposed on an intake path with a driving force taken off from an output shaft of the internal combustion engine. Additionally, the air amount estimating apparatus according to the present invention may also be applied to a direct injection type internal combustion engine and an internal combustion engine capable of both port injection and direct injection, in addition to the port injection type internal combustion engine as applied to the embodiment of the present invention.

In the supercharged internal combustion engine to which the air amount estimating apparatus of the present invention is applied, the intercooler is not an essential element. Further, the ABV and the EGR are not essential, either. The air amount estimating apparatus of the present invention is applicable to an internal combustion engine having either the ABV or the EGR or neither of them. In addition, the EGR may be a type that recirculates the exhaust gas back to the upstream section of the throttle, instead of into the intake pipe.

Description of Reference Numerals

M1 Turbo rotational speed model
M2 Compressor model
M3 Intercooler model
M4 Throttle model for outside of $P_m$ vibrational range
M4a Throttle model for $P_m$ vibrational range
M5 Intake pipe model

M6 Intake valve model
M7 Air cleaner model
M8 ABV model
M9 EGR model
M10 Air flow meter model
M100 Intercooler-intake pipe model for outside of $P_m$ vibrational range
M100a Intercooler-intake pipe model for $P_m$ vibrational range

**Claims**

1. An air amount estimating apparatus for a supercharged internal combustion engine having an intake path for introducing air drawn in from an outside into a cylinder, a compressor disposed in the intake path, a throttle disposed in the intake path downstream of the compressor, and an intake valve disposed at a connection between the intake path and the cylinder, the air amount estimating apparatus comprising:

   means for calculating a flow rate of air passing through the compressor (hereinafter referred to as a "compressor flow rate") based on pressure (hereinafter referred to as a "throttle upstream pressure") of air in an intake path section from the compressor to the throttle (hereinafter referred to as a "throttle upstream section") and based on a rotational speed of the compressor;
   means for calculating the throttle upstream pressure using a physical model developed based on a conservation law of air in the throttle upstream section and based on the compressor flow rate and a flow rate of air passing through the throttle (hereinafter referred to as a "throttle flow rate");
   means for calculating the throttle flow rate;
   means for calculating pressure of air (hereinafter referred to as a "throttle downstream pressure") in an intake path section from the throttle to the intake valve
   (hereinafter referred to as a "throttle downstream section"), the means using a physical model developed based on a conservation law of air in the throttle downstream section and calculating the throttle downstream pressure based on the throttle flow rate and a flow rate of air passing through the intake valve (hereinafter referred to as an "intake valve flow rate");
   means for calculating the intake valve flow rate based on the throttle downstream pressure; and
   means for calculating an amount of air drawn into the cylinder based on the intake valve flow rate; wherein:
   the throttle flow rate calculating means includes:

      first calculating means for calculating the throttle flow rate using an equation of throttle based on the throttle upstream pressure, the throttle downstream pressure, and an opening of the throttle;
      second calculating means for calculating the throttle flow rate using an equation of linear interpolation based on the compressor flow rate and the intake valve flow rate;
      selection condition determining means for determining whether or not a predetermined selection condition is satisfied, the predetermined selection condition including a pressure condition that a difference between the throttle upstream pressure and the throttle downstream pressure is smaller than a reference difference or a ratio of the throttle downstream pressure to the throttle upstream pressure is greater than a reference ratio; and
      selection means for opting to calculate the throttle flow rate using the first calculating means when the selection condition is determined not to be satisfied and opting to calculate the throttle flow rate using the second calculating means when the selection condition is determined to be satisfied.

2. The air amount estimating apparatus for a supercharged internal combustion engine according to claim 1, wherein:

   the internal combustion engine includes an actuator for drawing air from the throttle upstream section to an outside or introducing air into the throttle upstream section from the outside; and
   the throttle upstream pressure calculating means is configured to correct the throttle upstream pressure according as a flow rate of air in the throttle upstream section increases or decreases as the actuator operates.

3. The air amount estimating apparatus for a supercharged internal combustion engine according to claim 1 or 2, wherein:

   the internal combustion engine includes an actuator for drawing air from the throttle downstream section to an outside or introducing air into the throttle downstream section from the outside; and
the throttle downstream pressure calculating means is configured to correct the throttle downstream pressure according as a flow rate of air in the throttle downstream section increases or decreases as the actuator operates.

4. The air amount estimating apparatus for a supercharged internal combustion engine according to any one of claims 1 to 3, wherein:

the second calculating means is configured to calculate the throttle flow rate using an equation shown below, where $m_t$ is the throttle flow rate, $m_{cp}$ is the compressor flow rate, $m_c$ is the intake valve flow rate, $V_{us}$ is a volume of the throttle upstream section, and $V_{ds}$ is a volume of the throttle downstream section,

$$m_t = \frac{V_{ds} * m_{cp} + V_{us} * m_c}{V_{us} + V_{ds}}$$

Fig.1

Fig.2

Fig.3

EP 2 636 875 A1

# Fig.4

# Fig.5

# Fig.6

# Fig.7

Calculation of
intercooler pressure

S101

Calculate compressor flow rate $m_{cp}$
by compressor model

S102

$P_m$ vibrational range ?  →  No

Yes

S103

Calculate intake valve flow rate $m_c$
by intake valve model

S104

Calculate throttle flow rate
based on $m_{cp}$, $m_c$, $V_{ic}$ and $V_m$

$$m_t = \frac{V_m * m_{cp} + V_{ic} * m_c}{V_{ic} + V_m}$$

S105

Calculate throttle flow rate using throttle equations
based on $P_{ic}$, $P_m$ and throttle opening

$$m_t = \mu * A_t(TA) * \frac{P_{ic}}{\sqrt{R * T_{ic}}} * \Phi\left(\frac{P_m}{P_{ic}}\right)$$

S106

Calculate ABV flow rate $m_{abv}$ by ABV model

S107

Calculate intercooler pressure $P_{ic}$
by intercooler model

End

# Fig.8

Calculation of
intake pipe pressure

S201
Calculate intake valve flow rate $m_c$
by intake valve model

S202
$P_m$ vibrational range ? — No

Yes

S203
Calculate compressor flow rate $m_{cp}$
by compressor model

S204
Calculate throttle flow rate
based on $m_{cp}$, $m_c$, $V_{ic}$ and $V_m$

$$m_t = \frac{V_m * m_{cp} + V_{ic} * m_c}{V_{ic} + V_m}$$

S205
Calculate throttle flow rate using throttle equations
based on $P_{ic}$, $P_m$ and throttle opening

$$m_t = \mu * A_t(TA) * \frac{P_{ic}}{\sqrt{R * T_{ic}}} * \Phi\left(\frac{P_m}{P_{ic}}\right)$$

S206
Calculate EGR flow rate $m_{egr}$ by EGR model

S207
Calculate intake pipe pressure $P_m$
by intake pipe model

終了

22

## Fig.9

## Fig.10

## Fig.11

| | Amount of pressure change when only EGR operates | Amount of pressure change when only ABV operates |
|---|---|---|
| Amount of $P_m$ change by intake pipe model (Actual phenomenon corresponding value) | $\dfrac{dP_m}{dt} = \dfrac{\kappa * R_{air}}{V_m} * m_{egr} * T_{egr}$ | $\dfrac{dP_m}{dt} = 0$ |
| Amount of $P_{ic}$ change by intercooler model (Actual phenomenon corresponding value) | $\dfrac{dP_{ic}}{dt} = 0$ | $\dfrac{dP_{ic}}{dt} = -\dfrac{\kappa * R_{air}}{V_{ic}} * m_{abv} * T_{ic}$ |
| Amount of $P_m$ (=$P_{ic}$) change by united model | $\dfrac{dP_m}{dt} = \dfrac{dP_{ic}}{dt} = \dfrac{\kappa * R_{air}}{V_{ic}+V_m} * m_{egr} * T_m$ | $\dfrac{dP_m}{dt} = \dfrac{dP_{ic}}{dt} = -\dfrac{\kappa * R_{air}}{V_{ic}+V_m} * m_{abv} * T_m$ |

| | INTERNATIONAL SEARCH REPORT | International application No. |
|---|---|---|
| | | PCT/JP2010/070807 |

**A. CLASSIFICATION OF SUBJECT MATTER**
*F02D23/00*(2006.01)i, *F02D41/18*(2006.01)i

According to International Patent Classification (IPC) or to both national classification and IPC

**B. FIELDS SEARCHED**

Minimum documentation searched (classification system followed by classification symbols)
F02D23/00, F02D41/18

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-242063 A (Denso Corp.), 14 September 2006 (14.09.2006), paragraphs [0005] to [0023] & US 2006/0196182 A1 & US 2008/0051976 A1 & DE 102006000100 A1 | 1-4 |
| A | JP 2010-174710 A (Toyota Motor Corp.), 12 August 2010 (12.08.2010), paragraphs [0007] to [0028] & WO 2010/023547 A1 | 1-4 |
| A | JP 2007-321687 A (Denso Corp.), 13 December 2007 (13.12.2007), paragraphs [0006] to [0021] & DE 102007000300 A1 | 1-4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 December, 2010 (09.12.10) | 21 December, 2010 (21.12.10) |

| Name and mailing address of the ISA/ Japanese Patent Office | Authorized officer |
|---|---|
| Facsimile No. | Telephone No. |

Form PCT/ISA/210 (second sheet) (July 2009)

24

**INTERNATIONAL SEARCH REPORT**

International application No.

PCT/JP2010/070807

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-152899 A  (Toyota Motor Corp.),<br>15 June 2006 (15.06.2006),<br>paragraphs [0013] to [0033]<br>& US 2006/0116808 A1     & EP 1662127 A2 | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006152899 A

- JP 2008008155 A